# EUROPEAN PATENT SPECIFICATION

(11) **EP 0 522 585 B1**
(45) Date of publication and mention of the grant of the patent: **02.10.1996**
(21) Application number: 92111794.1
(22) Date of filing: 10.07.1992
(51) Int. Cl.: C08J 9/26, B01D 67/00, B01D 71/70, C08L 83/04

(54) **Process of fabricating porous silicone product**
Verfahren zur Herstellung eines porösen Polysiloxan-Produkts
Procédé de fabrication de produit poreux au silicone

(30) Priority: 11.07.1991 JP 171190/91
(43) Date of publication of application: 13.01.1993
(73) Proprietor: Lignyte Co., Ltd., Osaka (JP); Dow Corning Toray Silicone Co., Ltd., Chuo-ku, Tokyo (JP)
(72) Inventor: Uragami, Tadashi, Mino-shi, Osaka (JP); Tanaka, Yoshiaki, Takaishi-shi, Osaka (JP); Ozaki, Masaru, Ichihara-shi, Chiba (JP); Nakamura, Tatsuya, Nishinomiya-shi, Hyogo (JP)
(74) Representative: Goddar, Heinz J., Dr.

(56) References cited:
- EP-A- 0 097 914
- US-A- 3 756 967
- US-A- 3 812 224
- US-A- 3 849 528
- US-A- 4 522 753
- WORLD PATENTS INDEX LATEST Derwent Publications Ltd., London, GB; AN 89058211[08] & JP-A-1 011 141 (NIPPI KOLLAGEN KOGYO K.K.) 3 July 1984

## Description

### TECHNICAL FIELD

The present invention is directed to a process of fabricating a porous silicone product, and more particularly to a porous silicone membrane for use in membrane separation of a liquid component for a liquid solution containing two or more liquid components.

### BACKGROUND ART

Japanese Patent Publication (KOKOKU) No. 62-49897 discloses a process of fabricating a porous silicone product. The process comprises to firstly freeze a water emulsion of organopolysiloxane into a resulting frozen body followed by defrosting the frozen body to obtain a wet and spongy elastomer. Thereafter, the resulting elastomer is dried to remove the water content to thereby obtain a porous silicone product. Since this process comprises simple steps of freezing, defrosting and drying, the porous silicone product can be easily fabricated. However, the process is found to be only effective to fabricate the silicon product with closed or non-intercommunicating cells, and is not applicable to fabricate a silicone product with open or intercommunicating cells. This means that the silicone product fabricated by the process disclosed in the above publication is effective as a gasket or a heat insulation member which requires to have the closed cells, but can not be utilized as a filter or the like which necessitates open cells, for example, as a membrane filter for separation of a liquid component from a liquid solution containing two or more liquid components.

EP-A-0 097 914 discloses a very similar method of producing silicone elastomeric sponge. The method comprises freezing an aqueous silicone emulsion, then thawing and drying to produce a silicone sponge. The aqueous silicone emulsion comprises an ionically stabilized hydroxyl and blocked polydiorganosiloxane, an organic tin compound, a colloidal silica, and water. The sponge produced by this method contains irregular closed cells like those generated by the process disclosed in Japanese Patent Publication (KOKOKU) No. 62-49897 and is usefull as insulation and gasketing at high and low temperatures.

WPIL-abstract AN 89058211 [08] discloses a method for the production of a porous article of hydrophilic polymers, e.g. casein, cellulose or polyvinylalcohol, having open pores. To realize this, the hydrophilic polymer or a mixture therefrom and a surfactant which does not cause coagulation reaction with the hydrophilic polymer is completely frozen and then dried.

### DISCLOSURE OF THE INVENTION

The present invention has been accomplished to eliminate the above problem and has a primary object to provide a unique method of fabricating a porous silicone product with open cells.

The present invention is related to a process of fabricating a porous silicone product utilizing a water emulsion of an organopolysiloxane, said process comprising the steps of: preparing an emulsion including:
a) a substantially straight chain organopolysiloxane having at least two silanol groups per one molecule;
b) a cross-linking agent selected from colloidal silica, alkali metal silicate and hydrolyzable silane and partially hydrolyzed condensate of hydrolyzable silane, having at least three hydrolyzable groups attached to silicon atoms;
c) a curing catalyst;
d) an emulsifier; and
e) water,
said emulsion being capable of forming an elastomer by removal of water therefrom; and
freeze drying said emulsion to obtain said porous silicone product with water being sublimed therefrom, wherein any heating should be avoided at the initial stage of the drying.

A preferred embodiment of the present invention can be taken from claim 2.

### BRIEF DESCRIPTION OF THE DRAWINGS

FIG. 1 is a photomicrograph showing a cross section of a porous silicone membrane obtained in Example 1 at 50 times magnification; and
FIG. 2 is an electron photomicrograph showing the cross section of the above the silicone membrane at 250 times magnification.

### DETAILED DESCRIPTION OF THE INVENTION

The present invention will be discussed in detail. The water emulsion, i.e., water emulsion of a water-emulsifiable organopolysiloxane may include the one disclosed in Japanese Patent Publication (kokoku) No 62-49897 or like emulsions known in the art. For example, following known emulsions may be utilized in the present invention. A mixture emulsion of diorganopolysiloxane with silanol groups, colloidal silica and organic tin catalyst, as disclosed in Japanese Early Patent Publication (KOKAI) No.56-16553. A mixture containing an emulsion of diorganopolysiloxane with vinyl groups, an emulsion of organohydrodienepolysiloxane, and platinum catalyst, as disclosed in Japanese Early Patent Publication (KOKAI) No. 56-36546. A polymerization emulsion of cyclodiorganosiloxane and functional organic alkoxysilane as disclosed in Japanese Patent Publication (KOKOKU) No. 56-38609. A mixture emulsion of diorganopolysiloxane with silanol groups, hydrolyzable silane and curing catalyst, as disclosed in Japanese Patent Publication (KOKOKU) No. 59-36677.

The emulsion contains the followings in order to expedite curing by removal of water at room temperatures into a resulting elastomer;
a) substantially straight chain organopolysiloxane having at least two silanol groups per one molecule;
b) a cross-linking agent selected from the group consisting of colloidal silica, silicate of alkali metal, hydrolyzable silane, and partially hydrolyzed condensate of hydrolyzable silane;
c) curing catalyst;
d) emulsifier; and
e) water.

### Organopolysiloxane

Organopolysiloxane as defined in the above (a) is a polymer having at least two silanol groups per one molecule and is cross-linked by the cross-linking agent (b) into a rubber elastic body. Although the location of the silanol groups is not limited, the silanol groups are preferred to locate at the terminal chain ends of the polymer. Organic groups bonded to the silicon atoms of the organopolysiloxane are of monovalent hydrocarbon substituent or non-substituent groups which include alkyl group such as methyl, ethyl, propyl and butyl group; alkenyl group such as vinyl and allyl group; aryl group such as phenyl group; aralkyl group such as benzyl group; alkaryl group such as styryl, tolyl group; cycloalkyl group such as cyclohexyl, cyclopentyl group; or any one of the above groups in which hydrogen atoms are partially or entirely substituted by halogen of fluorine, chlorine or bromine, for example, 3,3,3-trifluoropropyl group. As the monovalent hydrocarbon groups, it is general to use methyl, vinyl or phenyl groups, among all, methyl groups. The monovalent hydrocarbon groups bonded to the silicon atoms may be identical or combination of different ones from each other. Organopolysiloxane is of substantially straight chain structure which may include some rather branch chains. Although organopolysiloxane is not limited to have a definite molecular weight, it is preferred to have a molecular weight of 5000 or more. This is because of the fact that desired tensile strength and elongation is obtained at a molecular weight of 5000 or more.

Such organopolysiloxane may include dimethylpolysiloxane of which terminal ends are closed by silanol groups, methylphenylpolysiloxane, copolymer of dimethylsiloxane and methylyphenylsiloxane, methylvinylpolysiloxane, and copolymer of dimethylsiloxane and methylvinylsiloxane. The above organopolysiloxane may be synthesized for example, by ring-opening polymerization of cyclodiorganosiloxane, by hydrolysis condensation of straight or branch chain organopolysiloxane having hydrolyzable alkoxy or acyloxy groups, or by hydrolysis of one or more diorganodihalogenosilanes.

### Cross-linking agent

The cross-linking agent constitutes a cross-linking of the above mentioned organopolysiloxane and may include colloidal silica, silicate of alkali metal, hydrolyzable silane, and partially hydrolyzed condensate of hydrolyzable silane. The colloidal silica may be fumed colloidal silica, precipitation colloidal silica, or colloidal silica stabilized with Na, NH3, or Al ions and having a particle size of 0.0001 to 0.1 µm. The amount of the colloidal silica is 1 to 150, more preferably 1 to 70, parts by weight of the colloidal silica is utilized for 100 parts by weight of the above organopolysiloxane. The silicate of alkali metal is preferred to be of water soluble and is prepared in an aqueous solution thereof. The silicate of alkali metal includes lithium silicate, sodium silicate, potassium silicate, and rubidium silicate. The amount of silicate of alkali metal preferably ranges from 0.3 to 30 parts by weight, more preferably, from 0.3 to 20 parts by weight for 100 parts by weight of organopolysiloxane. Hydrolyzable silane and partially hydrolyzed condensate of hydrolyzable silane are required to have in one molecule thereof at least three hydrolyzable groups bonded to the silicon atoms because of that an elastomer is not obtained with two or less hydrolyzable groups. The hydrolyzable group includes alkoxy group such as methoxy, ethoxy, and butoxy group; acyloxy group such as acetoxy group; substituted or non-substituted group such as acetoamide group and N-methylacetoamido group; substituted amino group such as N,N-diethylamino group; and ketoxime group such as methylethlyketoxime group. Examples of the cross-linking agent are methyltriethoxysilane, vinyltrimethoxysilane, normalpropylorthosilicate, ethylpolysilicate, propylpolysilicate, methyltri(propanoxy)silane, methyltri(methylethylketoxime)silane. Combination of two or more such cross-linking agents may be used. The amount of the cross-linking agent ranges preferably from 1 to 150 parts by weight for 100 parts by weight of organopolysiloxane.

### Curing catalyst

The above curing catalyst is employed to promote the cross-linking of organopolysiloxane by the cross-linking agent and include metal salt of organic acid such as dibutyl-tin-dilaurate, dibutyl-tin-diacetate, tin octenate, dibutyl-tin-dioctate, tin laurate, ferric stannooctenate, lead octanate, lead laurate, and zinc octenate; titanic acid ester such as tetrabutyltitanate, tetrapropyltitanate, dibutoxytitan-bis(ethylacetoacetate); and amine compound or hydrochlorate of n-hexylamine and guanidine. The curing catalyst is preferably made in advance into an emulsion with an aid of an emulsifier and water by a conventional method. The amount of the curing agent ranges preferably from 0.01 to 1.5, more preferably, from 0.05 to 1 parts by weight for 100 parts by weight of organopolysiloxane.

### Emulsifier

The above emulsifier for emulsifying the organopolysiloxane may be anionic, non-inonic or cationic emulsifier. The anionic emulsifier includes, for example, salts of higher fatty acids, salts of sulfuric acid esters of higher alcohols, alkylbenzenesulfonate, alkylnaphthalenesulfonate, and alkylsulfonate, polyethyleneglycolsulfate. The non-ionic emulsifier includes, for example, polyoxyethylenealkylphenylether, sorbitan fatty acid ester, polyoxyethylene sorbitan fatty acid ester, polyoxyalkylene fatty acid ester, polyoxyethylene polyoxypropylen, and monoglyceride of fatty acid. The cationic emulsifier includes, for example, aliphatic amine salts, quaternary ammonium salt and alkylpyridinum salts. One or more of these emulsifier may be utilized for preparation of the emulsion. The amount of the emulsifier ranges preferably from 2 to 30 parts by weight for 100 parts by weight of organopolysiloxane.

### Water

Water is utilized in sufficient amount to prepare an aqueous emulsion of organopolysiloxane with the cross-linking agent, the curing catalyst and the emulsifier. Therefore, no limitation is made to the amount of water.

An emulsion of the organopolysiloxane which forms an elastomer by removal of water therefrom can be prepared from the aqueous emulsion of the organopolysiloxane, the cross-linking agent, curing catalyst, emulsifier and water in accordance with one of known processes. For example, the aqueous emulsion can be made by utilizing an emulsifying device such as a homomixer, homogenizer, or colloid mill to emulsify dimethylpolysiloxane having silanol groups at its terminal ends into water with the emulsifier followed by adding and mixing the curing catalyst such as colloidal silica. Alternately, the aqueous emulsion is prepared by emulsifying cyclodiorganosiloxane, for example, octamethylcyclotetrasiloxane into water by the emulsifier, adding an open-ring polymerization catalyst to proceed polymerization under the application of heat for preparing dimethylpolysiloxane of which terminal ends are blocked by silanol groups followed by adding and mixing the cross-linking agent, for example, colloidal silica and the curing catalyst.

For excellent shelf life stability, it is preferred to firstly prepare a base emulsion which consists essentially of: 100 parts by weight of organopolysiloxane containing silanol groups; 1 to 150 parts by weight of colloidal silica, 0.3 to 30 parts by weight of silicate of metal alkali, or 1 to 150 parts by weight of hydrolyzable silane or partially hydrolyzed condensate thereof as the cross-linking agent; 0.01 to 1.5 parts by weight of the curing catalyst;
2 to 30 parts by weight of the emulsifier; and
water.
The resulting base emulsion is adjusted to have a 9 to 12 pH by a suitable pH adjustor to provide a resulting aqueous emulsion of organopolysiloxane of excellent shelf life stability. The pH adjustor includes amines such as dimethylamine and ethyleneamine, and hydroxides of alkali metal such as sodium hydroxide and potassium hydroxide. Preferably, organic amines are selected as the pH adjustor. Such organic amines includes, in addition to the above, monoethanolamine, triethanolamine, morpholine and 2-amino-2-methyl-1-propanol. After the pH adjustment, the emulsion is aged for a predetermined time period at a constant temperature. The aging temperature is selected so as not to destroy the emulsion and is preferably from 10 to 95 °C, and more preferably from 15 to 50 °C. The aging time period is selected in accordance with the aging temperature and is preferably, for example, a week or more at the aging temperature of 25 °C and 4 days or more at 40 °C. Thus obtained emulsion of organopolysiloxane exhibits excellent shelf life stability at room temperatures and is easy to cure into an elastomer at the room temperatures by removal of water therefrom.

When the shelf life stability at room temperatures is not required, the base emulsion may have the pH *of* 9 or less. The organopolysiloxane emulsion in accordance with the present invention may additionally include a thickening agent, filler, pigment, dye, heat-resisting agent, antiseptic, penetrant such as aqueous ammonia in a suitable amount. When the emulsion is prepared to include the cross-linking agent other than the colloidal silica, the resulting organopolysiloxane shows less viscosity and is difficult to be formed into thick elastomer. To avoid this insufficiency, it is preferred to additionally incorporate the filler such as quartz powder, calcium carbonate, magnesium oxide, zinc dioxide, titanium dioxide and carbon black. In order to give an increased tension strength as well as elongation to the resulting elastomer, the filler is preferably provided in the form of a colloid. The thickening agent includes carboxymethylcellulose, methylcellulose, hydroxyethylcellulose, polyvinylalcohol, and polyacrylic acid.

Prior to fabricating a porous silicon product with open cells from thus obtained organopolysiloxane emulsion, it is required to remove foams out of the emulsion by, for example, the vacuum defoaming process. Without the defoaming, the foams are likely to be left entrapped in the resulting porous silicone product, which fails to obtain the silicone product with uniform porosity. Especially when the silicone product is made into a membrane, the foams are cause of large holes in the membrane. With this result, when the membrane is utilized as a selective permeable membrane for separation of a liquid component from a solution containing two or more liquid components, good separation efficiency will not expected by the presence of the large holes in the membrane.

After defoaming, the organopolysiloxane emulsion is frozen within a freezer. For fabrication of the silicone membrane, the emulsion may be spread over a flat plate, or poured onto a flat bottom of a container to form a layer of uniform thickness, prior to the freezing. Also prior to the freezing, it is preferred to effect preliminary cooling of the emulsion down to such a minimum possible temperature as not to freeze the emulsion and to keep cooling over a predetermined period of time. For example, the cooling temperature is preferably set to a temperature which is higher only by 2 to 3 °C than the freezing point of the organopolysiloxane emulsion. The cooling is preferably kept continued for a time period of 1 to 5 hours. For example, the emulsion having a freezing point of - 10 °C is cooled in a cooled vessel maintained at a temperature of -7 to -8 °C for approximately 3 hours. Freezing of the emulsion without such preliminary cooling will cause stratification between water and solid content within the emulsion, thereby making it difficult to obtain the silicone product with uniform porosity. Also with this direct freezing, the water crystal, i.e. ice becomes into large size, which makes it difficult to obtain the porous silicone product with fine and dense cells.

After the preliminary cooling, the organopolysiloxane emulsion is frozen within the freezer. The freezing temperature may be as low as possible, and is selected to be a temperature which is lower by 5 °C or more, preferably 10 °C or more than the freezing point of the emulsion. With this freezing, the water contained in the organopolysiloxane emulsion is frozen to be separated therefrom, thereby allowing to react organopolysiloxane with the cross-linking agent, enhancing it into three-dimensional structure to result a silicone elastomer.

Thereafter, the silicone elastomer is dried without being defrosted in order to sublime the water content from the ice. Such drying is performed in vacuum with the silcone elastomer placed in a vacuum chamber of a freeze-drying device while recovering the water in a cold-trap manner. The vacuum drying is preferably carried out within the vacuum chamber under the vacuum pressure of 1 Torr (=̂ 133 Pa) or less for a time period of at least 4 hours. As a result of subliming the water content from the silicone elastomer, corresponding voids are left within the silicone elastomer such that the resulting elastomer has a number of open or intercommunicating cells. This is very opposite to the case where the silicone product with closed or non-intercommunicating cells is obtained as a consequence of defrosting the silicone elastomer prior to the drying. Accordingly, it should be required to effect drying as soon as possible so as to avoid defrosting the frozen silicone elastomer. Any heating should be avoided at the initial stage of the drying. However, it may be advantageous to apply the heat at the final stage of the drying for promoting and completing the drying.

The following Examples are further illustrative of this invention. All parts are by weight.

### Example 1

100 parts of dimethylpolysiloxane having 30 as repeating number of siloxane units and having its terminal end closed by silanol groups were mixed with 2 parts of sodium lauryl sulfate and 70 parts of water. The resulting mixture was passed twice through a homogenizer under a pressure of 150 kg/cm². Then, 1 part of dodecylbenzenesulfonic acid was added as a polymerization initiator to the mixture followed by being subject to emulsion polymerization at a room temperature for 16 hours, after which a solution of sodium hydroxide is utilized to adjust the pH of the mixture to 7, thereby preparing an emulsion A containing dimethylpolysiloxane having a molecular weight of 200,000 and having its terminal ends blocked by the silanol groups.

40 parts of dioctyl-tin-dilaurate were mixed with 10 parts of sodium lauryl sulfate and 40 parts of water followed by being passed twice through the homogenizer to prepare an emulsion B containing the curing catalyst. 100 parts of emulsion A were mixed with 1.5 parts of emulsion B and 25 parts of aqueous dissipation solution of colloidal silica (having a solid content of 30 wt%) as the cross-linking agent. Diethylamine was added for adjusting the pH of the resulting mixture to 11, after which the mixture was aged at a room temperature of 25 °C for 2 weeks to obtain a dimethylpolysiloxane emulsion.

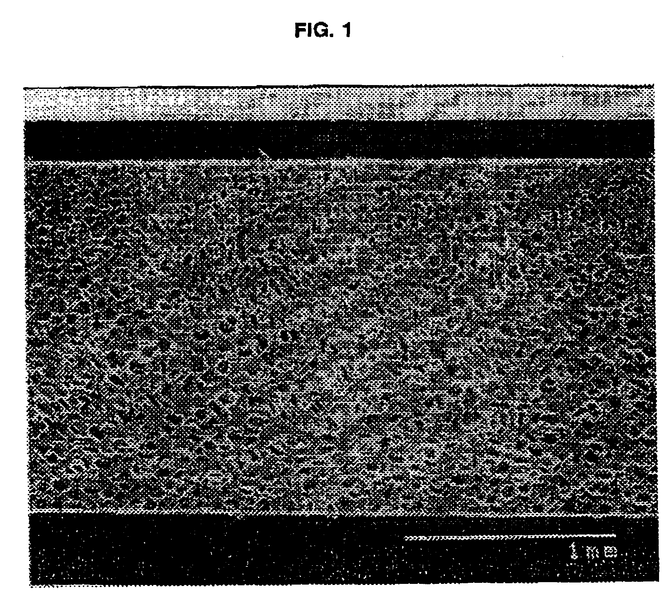

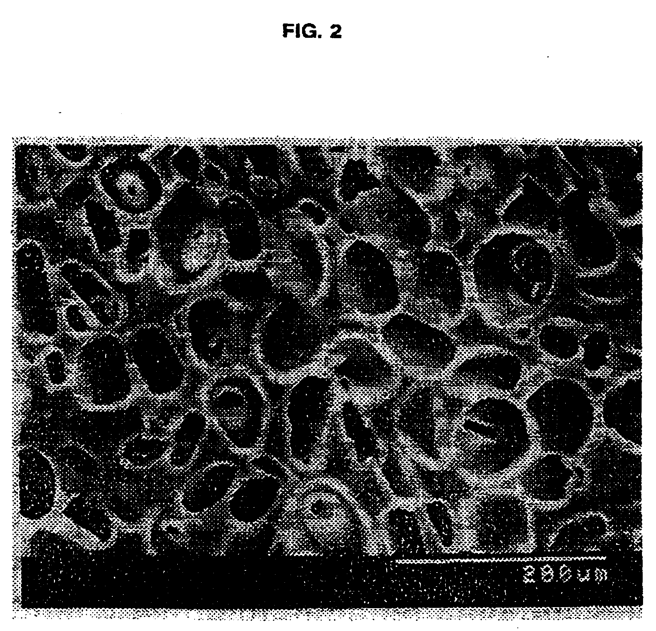

Then, the dimethylpolysiloxane emulsion was stood under a decompressed pressure of 50 Torr (=̂ 6650 Pa) for 20 minutes for defoaming of the emulsion, after which the emulsion was poured onto a Petri dish having 95 mm diameter and 15 mm depth in order to form a specimen of 2 mm thick. The Petri dish was sealed at its top opening by an aluminum foil to effect preliminarily cooling the specimen at a temperature of -6 °C for 3 hours. Next, the specimen was placed into a freezer maintained at a temperature of - 25 °C and kept for 15 hours to be frozen therein. After removal of the freezer, the specimen was placed in a vacuum chamber of a freeze-dryer available as "VD-80" from "Taitech Corp." to be dried without being defrosted under a vacuum pressure of 0.05 Torr at a cold trap temperature of -80 °C for 6 hours, thereby obtaining a porous silicone membrane of 2 mm thick. The resulting silicone membrane was found to have a number of open cells which have an average diameter of 70 µm and intercommunicated through voids of 3 µm in average diameter. FIGS. 1 and 2 show cross-sections of thus obtained silicone membrane in photomicrographs.

### Example 2

100 parts of emulsion A prepared in Example 1 were mixed with 1.5 parts of emulsion B prepared in Example 1, and 25 parts of aqueous dissipation solution of colloidal silica (having a solid content of 30 wt%) as the cross-linking agent to provide a dimethylpolysiloxane emulsion having the pH of 5.5. Thereafter, dimethylpolysiloxane emulsion was frozen and dried in the same manner as in Example 1 to provide a 2 mm thick porous silicone membrane except for that the emulsion has not been aged prior to the freeze-drying. The resulting silicone membrane was found to have a number of open cells having an average diameter of 30 µm and intercommunicated through voids of 1.5 µm in average diameter.

### Example 3

100 parts of emulsion A prepared in Example 1 were mixed with 1.5 parts of emulsion B prepared in Example 1, and 3 parts of sodium silicate as a curing catalyst. After being added with diethylamine for pH adjustment to 10, the mixture was aged at a room temperature of 25 °C for 4 weeks to prepare a dimethylpolysiloxane emulsion. Thus obtained emulsion was then frozen and dried in the same manner as in Example 1 to provide a 2 mm thick porous silicone membrane except for that the emulsion has not been aged prior to the freeze-drying. The resulting silicone membrane was found to have a number of open cells having an average diameter of 40 µm and intercommunicated through voids of 1.5 µm in average diameter.

### Example 4

100 parts of emulsion A prepared in Example 1 were mixed with 1 part of vinyltrimethoxysilane as a cross-linking agent and 0.1 part of dioctyl-tin-dilaurate as a curing catalyst followed by being stirred into a homogeneous emulsion of dimethylpolysiloxane. Thus obtained emulsion was then frozen and dried in the same manner as in Example 1 to provide a 2 mm thick porous silicone membrane except for that the emulsion has not been aged prior to the freezedrying. The resulting silicone membrane was found to have a number of open cells having an average diameter of 20 µm and intercommunicated through voids of 1 µm in average diameter.

### Comparative Example 1

The dimethylpolysiloxane emulsion prepared in Example 1 was defoamed and poured onto the Petri dish to form a specimen of 2 mm thickness. The specimen was placed in the freezer maintained at a temperature of - 20 °C and kept for 16 hours to be frozen therein. After removing out of the freezer, the specimen was left standing at a room temperature of 25 °C for 6 hours so as to be defrosted into a 2 mm thick silicone membrane saturated with water. Next, thus defrosted silicone membrane was dried within an oven of 70 °C for 20 hours to obtain a 1.1 mm thick porous silicone membrane. The resulting silicone membrane was found to have a number of minute closed cells having an average diameter of 70 µm and also found to have a skin layer on its surface.

### Comparative Example 2

The dimethylpolysiloxane emulsion prepared in Example 2 was treated in the identical manner as in Comparative Example 1 to provide a 1 mm thick porous silicone membrane. The resulting silicone membrane was found to have a number of minute closed cells having an average diameter of 30 µm and also found to have a skin layer on its surface.

### Comparative Example 3

The dimethylpolysiloxane emulsion prepared in Example 3 was treated in the identical manner as in Comparative Example 1 to provide a 1 mm thick porous silicone membrane. The resulting silicone membrane was found to have a number of minute closed cells having an average diameter of 40 µm and also found to have a skin layer on its surface.

### Comparative Example 4

The dimethylpolysiloxane emulsion prepared in Example 4 was treated in the identical manner as in comparative Example 1 to provide a 1.1 mm thick porous silicone membrane. The resulting silicone membrane was found to have a number of minute closed cells having an average diameter of 20 µm and also found to have a skin layer on its surface.

## Claims

1. A process of fabricating a porous silicone product utilizing a water emulsion of an organopolysiloxane, said process comprising the steps of:
preparing an emulsion including:
a) a substantially straight chain organopolysiloxane having at least two silanol groups per one molecule;
b) a cross-linking agent selected from colloidal silica, alkali metal silicate and hydrolyzable silane and partially hydrolyzed condensate of hydrolyzable silane, having at least three hydrolyzable groups attached to silicon atoms;
c) a curing catalyst;
d) an emulsifier; and
e) water,
said emulsion being capable of forming an elastomer by removal of water therefrom; and
freeze drying said emulsion to obtain said porous silicone product with water being sublimed therefrom, wherein any heating should be avoided at the initial stage of the drying.

2. A process as set forth in claim 1, wherein said freeze drying is carried out after cooling said emulsion to such a temperature as not to freeze said emulsion.

## Patentansprüche

1. Ein Verfahren zur Herstellung eines porösen Polysiloxan-Produkts unter Verwendung einer Wasseremulsion eines Organopolysiloxans, wobei besagtes Verfahren die Schritte umfaßt:
Herstellung einer Emulsion, welche einschließt:
a) ein im wesentlichen geradkettiges Organopolysiloxan mit wenigstens zwei Silanolgruppen pro einem Molekül;
b) ein Vernetzungsmittel, das ausgewählt ist aus kolloidalem Siliciumdioxid, Alkalimetallsilicat und hydrolisierbarem Silan und teilweise hydrolysiertem Kondensat von hydrolysierbarem Silan, mit wenigstens drei hydrolysierbaren Gruppen, die an Siliciumatome gebunden sind;
c) einen Härtungskatalysator;
d) einen Emulgator; und
e) Wasser,
wobei besagte Emulsion durch Entfernung von Wasser daraus ein Elastomer bilden kann; und
Gefriertrocknung besagter Emulsion, um besagtes poröses Polysiloxan-Produkt zu erhalten, wobei Wasser daraus sublimiert wird, wobei jegliche Erwärmung in der anfänglichen Stufe der Trocknung vermieden werden sollte.

2. Ein Verfahren nach Anspruch 1, wobei besagte Gefriertrocknung durchgeführt wird, nachdem besagte Emulsion auf solch eine Temperatur abgekühlt worden ist, daß besagte Emulsion nicht gefriert.

## Revendications

1. Un procédé de fabrication d'un produit poreux en silicone utilisant une émulsion aqueuse d'un organopolysiloxane, ledit procédé comprenant les étapes de :
préparation d'une émulsion comprenant :
a) un organopolysiloxane à chaîne sensiblement linéaire ayant au moins deux groupes silanol par molécule ;
b) un agent de réticulation choisi parmi la silice colloïdale, un silicate de métal alcalin, et un silane hydrolysable et un produit d'hydrolyse-condensation partielle de silane hydrolysable ayant au moins trois groupes hydrolysables liés aux atomes de silicium ;
c) un catalyseur de durcissement ;
d) un agent émulsionnant ; et
e) de l'eau,
ladite émulsion étant capable de former un élastomère par élimination de son eau ; et
cryodessiccation de ladite émulsion pour obtenir ledit produit poreux en silicone dont l'eau a été éliminée par sublimation, tout chauffage devant être évité au stade initial de la dessiccation.

2. Un procédé tel que spécifié dans la revendication 1, dans lequel ladite cryodessiccation est effectuée après refroidissement de ladite émulsion à une température telle que ladite émulsion ne soit pas congelée.
